# EUROPEAN PATENT APPLICATION

(11) **EP 1 046 412 A1**
(43) Date of publication of application: **25.10.2000**
(21) Application number: 00301802.5
(22) Date of filing: 06.03.2000
(51) Int. Cl.: A62C 2/06, F16L 5/04

(54) **A pipe with a weakened section and method for preventing fire transmission**

(30) Priority: 21.04.1999 GB 9908980; 15.07.1999 GB 9916504
(71) Applicant: Carboline Europe Limited, Coventry CV4 9TJ (GB)
(72) Inventor: Maris, Nigel, Norton Lindsey, Warwicks CV35 8JE (GB)
(74) Representative: Bannerman, David Gardner

(57) **Abstract**

The application relates to a pipe including a weakened section carrying or incorporating an intumescent material. The weakened section is used to ensure that a section of the pipe collapses upon exposure to fire, thus allowing the pipe to be sealed, for example by use of the intumescent material.

Methods of preventing fire transmission comprising the steps of introducing a weakened section of a pipe to be positioned to where the pipe passes through a wall, floor or ceiling are also provided.

## Description

The invention relates to a pipe, a pipe section and a method of preventing fire transmission.

It can be necessary for a plastic pipe to pass through a fire wall, ceiling or floor. This creates a potential pat for fire and therefore a weakness in the barrier to fire presented by the wall, ceiling or floor. It is known to surround a pipe with intumescent material where it passes through a wall. In the case of a fire, the pipe will tend to soften or melt and the intumescent material will swell to block the resulting aperture. Where a pipe has very thick walls, it may not collapse satisfactorily leaving a potential fire path.

According to one aspect of the invention there is provided a pipe including a weakened section carrying or incorporating an intumescent material.

In this way, the collapse of the weakened section of the pipe can be ensured. The pipe will naturally have a lower rupture strength in the weakened section. However, the weakened section will be positioned in a wall, ceiling or floor and the gap between the pipe and the side of the bore will be packed with filler material compensating for the reduction in rupture strength at the weakened section.

The weakened section may have reduced pipe wall thickness or may include at least one region of reduced mechanical strength.

According to another aspect of the invention, there is provided a pipe section, the pipe section carrying or incorporating intumescent material, the pipe section being such that, in the case of a fire, the pipe section substantially fully collapses, the pipe section being arranged to be attached to another pipe section at each end.

The pipe section may include at least one region of reduced mechanical strength.

According to a further aspect of the invention there is provided a pipe section for carrying fluid, the pipe section including at least a portion in which the inwardly facing wall carries or incorporates an intumescent material so that in a fire the intumescent material will swell to provide a fife barrier across the internal diameter of the pipe section, the pipe section including attachment means at one or each end to attach the pipe sections to other pipes.

In this case, even if the pipe does not fully collapse, the intumescent material will block the pipe preventing the creation of a fire path.

The section may include radial positioning means to position the section radially in a bore in a wall, floor or ceiling.

The positioning means preferably comprises means to resiliently engage the walls of the bore. The positioning means may comprise any suitable type of locating and retaining means and may comprise at least one radially outwardly extending spring arm and preferably comprises a plurality of said spring arms circumferentially spaced around the section.

The section may include longitudinal positioning means to position the section longitudinally in a bore in a wall, floor or ceiling. The longitudinal positioning means may take any suitable form and may comprise at least one flange extending radially outwardly from the pipe section at one end thereof to abut a major surface of a wall, floor or ceiling. Preferably, a single flange is provided which is continuous circumferentially around the section to provide a shutter for filler material to be inserted between the bore wall and the pipe section.

The section may be made of plastics material. The flange and/or spring arms may be integral with the main part of the pipe.

According to another aspect of the invention there is provided a method of preventing fire transmission comprising the steps of introducing a weakened section in a pipe to be positioned to where the pipe passes through a wall, floor or ceiling.

The weakened section may have a reduced pipe wall thickness or may include at least one region of reduced mechanical strength.

According to a further aspect of the invention, there is provided a method of preventing fire transmission comprising the steps of introducing intumescent material to the inwardly facing wall of at least a section of the pipe, the section to be positioned where the pipe passes through a wall, floor or ceiling.

Embodiments of the invention will now be described by way of example and with reference to the accompanying drawings, in which:
Fig. 1 is a top plan view in cross-section of a pipe section of a first embodiment of the invention, in place in a wall with pipes attached;
Fig. 2 is a top plan view in cross-section of a pipe section of a second embodiment of the invention with pipes attached;
Fig. 3 is a view of the pipe section of Fig. 2 but in place in a wall; and,
Fig. 4 s a perspective view of the pipe section of the second embodiment showing shorter lengths of the attached pipes.

The pipe section 10 of the embodiment comprises a rigid sleeve 12 with a flexible intumescent lining 14. The sleeve 12 is a relatively short cylindrical tube. A radially outwardly extending flange 16 is provided at one end and extends continuously around the external circumference of the sleeve 12 at constant radial length. Two axially spaced rows of spring arms 18 are provided around the circumference of the sleeve 12 extending radially outwardly therefrom adjacent the flange 16. There are four spring arms 18 in each row. Each spring arm is angled to the surface of the sleeve 12 in the direction of the flange 16. At each end of the sleeve 12 is provided a connector 20 which is a standard snap fixing, such as the "pipe closer assembly" sold by Nullifire Limited of Coventry, to connect the pipe section 10 to a further pipe section. The sleeve 12, flange 16 and spring arms 18 are integrally made of a plastics material such as uPVC, HDPE, PPE, PE, ABS or similar polymer materials.

In use, a pipe 4 is brought up to a wall 6 and a bore 8 is formed in the wall 6 at the desired position for the pipe 4. The pipe 4 is cut adjacent the wall 6 and the pipe section 10 of the embodiment is attached to the cut end using one of the snap fixings 20. The pipe section 10 is inserted into the wall 6 until the flange 16 abuts the major wall surface 22. The flange 16 thus acts to longitudinally position the pipe section 10. The spring arms 18 will engage the wall 24 of the bore 8 and will act to radially position the pipe section 10 and, due to their angle, to resist removal. A filler material such as mastic which may be intumescent is then injected into the gap 26 between the cylindrical sleeve 12 and the wall 24 of the bore 8. The flange 16 will act as a shutter at one end of the gap 26. A further length of pipe 28 is connected to the pipe section 10 at the other end by means of the second snap fixing 20 to complete installation.

The pipe 4, 28 to which the pipe section 10 is attached may be relatively thick walled. If the pipe section 10 were not used, then, in the case of a fire, the thick walled pipe, which may be coated with intumescent material, may collapse, but if it does not collapse completely because of its inherent strength then the likely melting or breaking away of the part of the pipe which is in the fire, will leave a fire path through the centre of the pipe to the other side of the wall.

In the case of the embodiment however the intumescent material will swell to completely block the inside of the pipe section so resisting the passage of fire and preserving the integrity of the fife wall as a barrier to fire.

The pipe section 10 may be used with pipes 4, 28 intended to carry, for example, waste water, laboratory waste, effluent, sewage and industrial processing material.

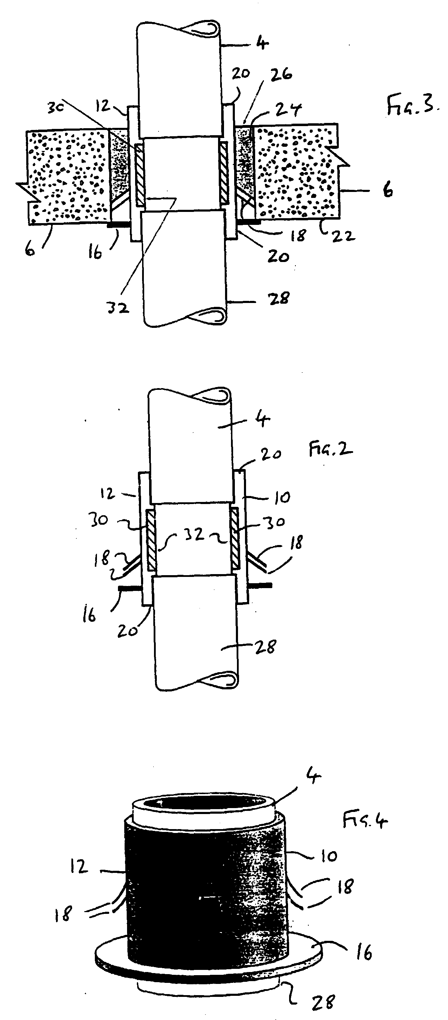

Figs. 2, 3 and 4 show the second embodiment which is similar to the first. Only the differences from the first embodiment will be described and the same reference numerals will be used for equivalent features.

In the second embodiment, rather than providing intumescent material as a flexible intumescent lining 14 retained around the interior surface of the sleeve 12, the sleeve 12 is thicker and includes a circumferential recess 30 to receive intumescent material held in place by a thin membrane 32 to lie flush with the inner surface of the sleeve 12.

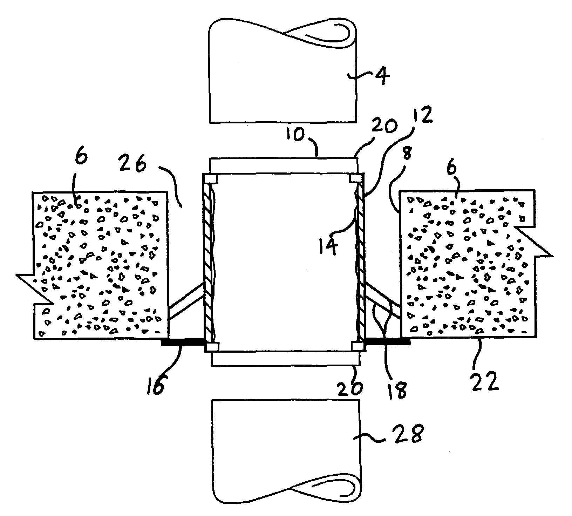

In a further embodiment, the sleeve 12 may be considerably thicker than shown in at least Fig. 1 of the drawings, but may include a plurality, say three, circumferentially spaced regions of reduced thickness extending over the full axial length of the sleeve 12.

In a further embodiment, intumescent material is provided on the inwardly and outwardly facing walls of the pipe section 10 so that if the sleeve 12 collapses in the heat of the fire the intumescent will swell to block any resulting gap.

In another embodiment, the intumescent material is provided only on the outwardly facing wall of the pipe section 10 and the complete collapse of the relatively thin walled pipe section 10 is then relied upon.

In a further embodiment, the pipe section 10 is integral with the pipes 4, 28.

While the embodiment has been described in the context of passing through a wall 6, clearly it is applicable to floors, ceilings or the like.

While a snap fixing 20 has been described, any suitable type of fixing could be used in its place.

## Claims

1. A pipe including a weakened section carrying or incorporating an intumescent material.

2. A pipe according to claim 1, wherein the weakened section comprises an area of reduced pipe wall thickness and/or an area of reduced mechanical strength.

3. A pipe according to claim 1 or claim 2 wherein an inner surface of the pipe comprises or incorporates the intumescent material.

4. A pipe according to any preceding claim additionally comprising, at least at one end, means to attach the pipe to another pipe.

5. A pipe according to any preceding claim, additionally comprising radial positioning means to position the pipe radially within a bore in a wall, floor or ceiling.

6. A pipe according to claim 5, wherein the or each radial positioning means comprises at least one radially extending spring arm.

7. A pipe according to any preceding claim comprising longitudinal positioning means to position the pipe longitudinally in a bore of a wall, floor or ceiling.

8. A pipe section according to claim 7, wherein the longitudinal positioning means comprises a single flange substantially circumferentially around a portion of the pipe.

9. A pipe according to any preceding claim, wherein the pipe comprises a plastics material.

10. A wall, floor or ceiling having mounted therein a pipe according to any preceding claim.

11. A method of preventing fire transmission comprising the steps of introducing a weakened section in the pipe to be positioned to where the pipe passes through a wall, floor or ceiling.

12. A method according to claim 11 wherein the weakened section comprises reduced wall thickness and/or a region of reduced mechanical strength.
